# EUROPÄISCHE PATENTSCHRIFT

(11) **EP 2 417 581 B1**
(45) Veröffentlichungstag und Bekanntmachung des Hinweises auf die Patenterteilung: **23.09.2015**
(21) Anmeldenummer: 10713422.3
(22) Anmeldetag: 30.03.2010
(51) Int. Cl.: B60R 25/102, G07C 5/08

(54) **VERFAHREN UND VORRICHTUNG ZUR ÜBERTRAGUNG VON DATEN EINES FAHRZEUGS AUF EIN MOBILGERÄT SOWIE ENTSPRECHEND AUSGESTALTETES MOBILGERÄT**
METHOD AND APPARATUS FOR TRANSMISSION OF DATA OF A VEHICLE TO A MOBILE DEVICE AND CORRESPONDINGLY EQUIPPED MOBILE DEVICE
PROCÉDÉ ET DISPOSITIF POUR TRANSMETTRE DES DONNÉES D'UN VÉHICULE À UN APPAREIL MOBILE AINSI QU'UN APPAREIL MOBILE

(30) Priorität: 09.04.2009 DE 102009017048
(43) Veröffentlichungstag der Anmeldung: 15.02.2012
(73) Patentinhaber: Volkswagen Aktiengesellschaft, 38440 Wolfsburg (DE)
(72) Erfinder: FRICKE, Hans-Christian, 31224 Peine (DE); KRÜGER, Jens, 38518 Gifhorn (DE)
(74) Vertreter: Sticht, Andreas
(86) Internationale Anmeldenummer: PCT/EP2010/002023
(87) Internationale Veröffentlichungsnummer: WO 2010/115557

(56) Entgegenhaltungen:
- EP-A2- 1 696 392
- DE-A1- 10 222 141
- DE-A1- 10 253 915
- DE-A1-102004 025 886
- DE-A1-102006 011 704
- DE-A1-102006 041 765
- US-A1- 2007 100 514
- US-A1- 2008 255 718

## Beschreibung

Die vorliegende Erfindung betrifft ein Verfahren und eine Vorrichtung, um Daten eines Fahrzeugs von diesem Fahrzeug auf ein Mobilgerät, beispielsweise ein Mobiltelefon, zu übertragen. Darüber hinaus betrifft die vorliegende Erfindung ein entsprechend ausgestaltetes Mobilgerät und ein entsprechend ausgestaltetes Fahrzeug.

Die DE 10 2006 011 704 A1 offenbart eine Fahrzeugfernaktivierung und -steuerung mit Statusrückmeldung an einen Fernbedienungs-Controller.

Die US 2008/0255718 A1 beschreibt ein Sammeln und Darstellen von Statistikdaten eines Fahrzeugs. Mittels einer tragbaren Einrichtung können die Statistikdaten dargestellt werden.

Die DE 102 53 915 A1 beschreibt die Durchführung einer Türverriegelungsoperation für ein Fahrzeug, wenn ein Empfänger des Fahrzeugs kein Antwortsignal empfängt.

Die US 2007/0100514 A1 offenbart ein Mobilgerät, auf welchem Fahrzeuginformationen (z. B. Reifendruck, Innentemperatur) dargestellt werden, welche von dem Fahrzeug an das Mobilgerät gesendet werden.

Die DE 10 2004 023 182 A1 beschreibt eine portable Fahrerinformationsvorrichtung für ein Kraftfahrzeug, wobei Kraftfahrzeuginformationen kabellos zugeführt werden.

Die DE 199 19 501 B4 offenbart eine Speicherung von betriebsabhängigen Daten (z.B. Kilometerstand, Tankinhalt, Fahrzeugfehler) auf einem Speicherelement, wobei diese Daten und Energie induktiv übertragen werden.

Die DE 103 40 184 A1 betrifft eine Einstellung eines Parameters eines Kraftfahrzeugs. Dabei umfasst ein Schlüssel auch eine Anzeige von Zustandsdaten des Kraftfahrzeugs, wobei diese Zustandsdaten über Induktionspulen oder Lichtsignale erfolgt.

Die DE 10 2004 003 701 A1 offenbart einen Fahrzeugschlüssel, welcher bei einem Entfernen von einem Fahrzeug Daten zum Auffinden des Fahrzeugs abgespeichert.

Die EP 1078138 B1 beschreibt einen Transponder mit einer Richtcharakteristik, um einen Standort eines Fahrzeugs bestimmen zu können.

Die DE 19938951 A1 offenbart eine Vorrichtung und ein Verfahren zum Auffinden eines Kraftfahrzeugs mittels eines GPS-Empfängers.

Die vorliegende Erfindung stellt sich die Aufgabe, ausgehend von dem vorab beschriebenen Stand der Technik eine Synchronisierung oder Interaktion zwischen dem Fahrzeug und dem Mobilgerät zu verbessern bzw. zu erleichtern.

Erfindungsgemäß wird diese Aufgabe durch ein Verfahren zur Übertragung von Daten eines Fahrzeugs auf ein Mobilgerät nach Anspruch 1, eine Vorrichtung zur Übertragung von Daten eines Fahrzeugs auf ein Mobilgerät nach Anspruch 9, ein Mobilgerät zum Empfang von Daten eines Fahrzeugs nach Anspruch 11 gelöst. Die abhängigen Ansprüche definieren bevorzugte und vorteilhafte Ausführungsformen der vorliegenden Erfindung.

Im Rahmen der vorliegenden Erfindung wird ein Verfahren zur Übertragung von Daten eines Fahrzeugs auf ein Mobilgerät bereitgestellt. Dabei wird ein Zeitpunkt erfasst, zu welchem das Mobilgerät zusammen mit dem Besitzer des Mobilgeräts, beispielsweise dem Fahrer des Fahrzeugs, das Fahrzeug verlässt. Eine Übertragung der Daten von dem Fahrzeug auf das Mobilgerät wird sofort ab dem erfassten Zeitpunkt unter einer Steuerung durch das Mobilgerät durchgeführt.

Die Übertragung der Daten von dem Fahrzeug auf das Mobilgerät zu einem Zeitpunkt durchzuführen, zu welchem das Mobilgerät das Fahrzeug verlässt, weist mehrere Vorteile auf. Zum einen kann dadurch auf eine Übertragung der Daten während der Fahrt des Kraftfahrzeugs verzichtet werden. Zum anderen werden die Daten über das Fahrzeug von dem Mobilgerät in aller Regel nur dann abgerufen, wenn sich das Mobilgerät außerhalb des Fahrzeugs befindet, so dass der Zeitpunkt des Verlassens des Fahrzeugs optimal ist, um möglichst aktuelle Daten über das Fahrzeug auf das Mobilgerät zu übertragen. Darüber hinaus ist eine Übertragung beim Verlassen des Fahrzeugs ein Moment, zu welchem eine Übertragung der Daten gerade noch mit einer Nahfeldkommunikation, wie beispielsweise Bluetooth, möglich ist, bevor das Mobilgerät zu weit von dem Fahrzeug entfernt ist.

Die Übertragung der Daten erfolgt dabei automatisch, ohne dass dazu eine Aktion des Besitzers des Mobilgeräts notwendig ist (Synchronisation im Hintergrund).

Der Verbindungsaufbau zwischen dem Fahrzeug und dem Mobiltelefon erfolgt dabei insbesondere mittels eines schnellen Bluetooth-Verbindungsaufbaus (Push-Verbindung). Dazu sucht das Fahrzeug zyklisch Bluetooth-fähige mit einer entsprechenden erfindungsgemäßen Fahrzeugdatenaustauschsoftware für dieses Fahrzeug versehene Mobilgeräte, fragt bei einem gefundenen dieser Mobilgeräte die von diesem verfügbaren Dienste ab ("Service Inquiry") und speichert einen verfügbaren Push-Kanal ab, falls ein solcher vorhanden ist. Bei mehreren verfügbaren Push-Kanälen wird der höchste Push-Kanal gespeichert. Nach einer Beendigung einer Push-Verbindung kann eine nochmalige Abfrage der verfügbaren Dienste ("Service Inquiry") stattfinden.

Anders ausgedrückt werden in einem Schritt vor der eigentlichen Fahrzeugdatenübertragung insbesondere Mobilgeräte gesucht, welche dem Fahrzeug bekannt sind (vorherige explizite Kopplung zwischen Mobilgerät und Fahrzeug) und auf denen das erfindungsgemäße Verfahren zur Übertragung der Daten des Fahrzeugs installiert ist. Wenn das Fahrzeug mit einem Mobilgerät zur Übertragung der Fahrzeugdaten in Kontakt treten will, versucht das Fahrzeug in der Regel das erste an das Fahrzeug gekoppelte Mobilgerät zu kontaktieren, wenn dies nicht gelingt das zweite, usw.. Jedes Mobilgerät ist durch die auf ihm installierte erfindungsgemäße Software vorteilhafterweise derart konfiguriert, dass bei einer eingehenden Datenverbindung von dem Fahrzeug (z.B. durch Verwendung der Bluetooth-Push-Registry) das erfindungsgemäße Verfahren automatisch im Hintergrund gestartet wird.

Bei einer erfindungsgemäßen Ausführungsform werden Daten (z.B. der Tankfüllstand und der Kilometerstand), welche in einem bestimmten Betriebszustand des Fahrzeugs nicht mehr erfasst werden können, gespeichert, bevor das Fahrzeug diesen Betriebszustand erreicht und bevor diese Daten von dem Fahrzeug an das Mobilgerät übertragen werden.

Dadurch ist es möglich, dass Daten, welche über den CAN-Bus erfasst werden, auch nach einer Deaktivierung des CAN-Busses, welche beispielsweise kurz nach einer Verriegelung des Fahrzeugs durchgeführt wird, auf das Mobilgerät übertragen werden können, auch wenn der CAN-Bus zu dem Zeitpunkt der Übertragung nicht mehr aktiv ist.

Daten über kritische Zustände des Fahrzeugs, wie beispielsweise eine Warnung vor einem geringen Tankinhalt, eine Warnung vor einem zu geringen Reifendruck oder eine Warnung vor einer zu geringen Wischwassermenge, können zu einem Zeitpunkt auf das Mobilgerät übertragen werden, zu welchem der kritische Zustand eintritt oder zu welchem der kritische Zustand von dem erfindungsgemäßen Verfahren erfasst wird. Dabei wird unter einem kritischen Zustand ein Zustand des Fahrzeugs verstanden, welcher eine Weiterfahrt mit dem Fahrzeug negativ beeinflusst, erschwert oder unmöglich macht.

Indem die Daten über kritische Zustände des Fahrzeugs sofort (und nicht erst bei einem Verlassen des Fahrzeugs) übertragen werden, ist sichergestellt, dass diese Daten auch in einem Fall auf dem Mobilgerät gespeichert sind, in welchem eine Übertragung beim Verlassen des Fahrzeugs fehlschlägt. Um zu gewährleisten, dass die Daten über den entsprechenden kritischen Zustand jeweils möglichst aktuell sind, kann die Übertragung der entsprechenden Daten in einem kritischen Zustand periodisch (beispielsweise alle 10 min oder alle 10 Fahrkilometer) erfolgen.

Bei der Durchführung der Übertragung der Daten kann das Mobilgerät in einem ersten Schritt abfragen, welche Informationen von dem Fahrzeug übertragen werden können. Daraufhin kann das Mobilgerät in einem dem ersten Schritt folgenden zweiten Schritt in Abhängigkeit davon, welche Informationen von dem Fahrzeug übertragen werden können, die Daten des Fahrzeugs auf das Mobilgerät übertragen lassen.

Durch dieses vorab beschriebene Vorgehen ist sichergestellt, dass sich das Mobilgerät an das Fahrzeug oder die Möglichkeiten des Fahrzeugs anpasst.

Wie bereits vorab angedeutet worden ist, erfolgt die Übertragung der Daten vorteilhafterweise direkt zwischen dem Fahrzeug und dem Mobilgerät mittels eines Nahbereichfunks (Reichweite kleiner als 1000 m).

Die Verwendung eines Nahbereichfunks oder einer Nahbereichskommunikation weist den Vorteil auf, dass die Übertragung der Daten in der Regel kostenlos erfolgen kann. Darüber hinaus ist bei einer direkten Kommunikation zwischen dem Fahrzeug und dem Mobilgerät keine weitere Infrastruktur (z.B. ein GSM-Netz, ein UMTS-Netz, ein Server zur dezentralen Speicherung der Daten) involviert, so dass ein Ausfall dieser Infrastruktur das erfindungsgemäße Verfahren nicht negativ beeinflussen kann.

Bei einer erfindungsgemäßen Ausführungsform geht das erfindungsgemäße Verfahren davon aus, dass der Zeitpunkt, zu welchem das Mobilgerät das Fahrzeug verlässt, dann vorliegt, wenn eines der nachfolgenden Ereignisse eingetreten ist oder erfasst worden ist:
- der Motor des Fahrzeugs wird abgestellt,
- der Zündschlüssel des Fahrzeugs wird abgezogen,
- das Fahrzeug wird entweder per Schlüssel oder per Funkfembedienung verriegelt,
- nach dem Abstellen des Motors wird zumindest eine Tür erst geöffnet und dann wieder geschlossen,
- nach dem Abstellen des Motors wird die Fahrzeugbeleuchtung ausgeschaltet,
- in ein Automatikgetriebe des Fahrzeugs wird der P-Gang eingelegt,
- nach dem Abstellen des Motors wird die Handbremse des Fahrzeugs angezogen,
- ein Verlassen eines Fahrzeugsitzes, insbesondere des Fahrersitzes, wird (z.B. über eine Sitzbelegungserkennung) erfasst,
- eine Alarmanlage des Fahrzeugs wird aktiviert,
- ein Verlassen des Innenraums des Fahrzeugs wird (z.B. über eine Innenraumüberwachung) erfasst,
- eine bevorstehende Deaktivierung des Bordnetzes (CAN-Busses) wird (z.B. über das CAN-Netzwerkmanagement) erfasst, und
- ein Entfernen des Mobilgeräts (1) aus einer Mobilgeräthalterung des Fahrzeugs wird erfasst.

Tritt eines der oben genannten Ereignisse ein, dann wird bei dieser Ausführungsform die Übertragung der aktuellen Daten des Fahrzeugs an das Mobilgerät durchgeführt oder veranlasst. Um eine Anzahl der Übertragungen pro Zeiteinheit zu beschränken (um dadurch beispielsweise einen Energieverbrauch des Mobilgeräts zu begrenzen), kann nach einer erfolgreichen Übertragung der Daten ein vorbestimmtes Zeitinterval (z.B. 30 s) gewartet werden, bis eine weitere Übertragung erfolgt. Das heißt, dass in diesem Zeitinterval keine Übertragung stattfindet, auch wenn eines der oben gelisteten Ereignisse in diesem Zeitinterval auftritt. Falls nach einer erfolgreichen Übertragung innerhalb des vorbestimmten Zeitintervalls eines der vorab gelisteten Ereignisse auftritt, erfolgt eine Übertragung der aktuellen Daten nach Ablauf des vorbestimmten Zeitintervalls.

Darüber hinaus ist es möglich, dass die Übertragung der Daten abgebrochen wird, sobald erfasst wird, dass das Mobilgerät das Fahrzeug doch nicht verlässt (z.B. wenn der Motor des Fahrzeugs gestartet wird).

Die Daten, welche im Rahmen der vorliegenden Erfindung von dem Fahrzeug an das Mobilgerät übertragen werden, umfassen dabei zumindest eine von folgenden Informationen:
- einen Öffnungsgrad eines Fensters, einer Tür, eines Schiebedaches, einer Klappe, eines Deckels des Fahrzeugs. Dabei kann der Öffnungsgrad auch nur dann übertragen werden, wenn das Fenster, die Tür, dass Schiebedach, die Klappe oder der Deckel nicht vollständig geschlossen ist. Darüber hinaus ist es denkbar, als den Öffnungsgrad nur die Information "offen" zu übertragen. Dabei kann auch das Fenster, die Tür, das Schiebefenster die Klappe oder der Deckel bildlich dargestellt werden, welches offen ist.
- einen Verriegelungszustand einer Tür des Fahrzeugs, was den Verriegelungszustand des gesamten Fahrzeugs umfasst,
- einen Füllstand eines Tanks (z.B. Brennstofftank oder Wischwassertank) des Fahrzeugs,
- einen Ölstand (im Motor) des Fahrzeugs,
- einen Druck eines Reifens des Fahrzeugs,
- eine aktuelle geographische Position des Fahrzeugs,
- einen Betriebszustand einer Beleuchtungseinrichtung (z.B. Standlicht, Innenraumleuchte) des Fahrzeugs,
- eine Verbrauchsangabe (z.B. Treibstoff pro Kilometer, Abgasgewicht (z.B. CO₂) pro km) und
- eine Information über einen bevorstehenden Service an dem Fahrzeug.

Die Art und Weise einer Darstellung der von dem Fahrzeug an das Mobilgerät übertragenen Daten entspricht dabei im Wesentlichen der Art und Weise, wie eine entsprechende Information bei einem heutigen Fahrzeug mittels des Kombiinstruments einem Fahrer des Fahrzeugs präsentiert wird, d.h. es wird beispielsweise mit Symbolen, Beschriftung und/oder einer Silhouette des Fahrzeugs gearbeitet.. Bei anderen oder zukünftigen Fahrzeugen mit Elektro- oder HybridAntrieb können auch weitere Informationen, wie beispielsweise ein Ladezustand einer Batterie, ein Füllstand eines Gastanks, dargestellt werden.

Falls die Daten in Form von mehreren zusammengehörenden Darstellungen (z.B. über Füllstände von Öl, Wasser, Brennstoff) angezeigt werden, können die unterschiedlichen Darstellungen mittels einer Zeichenkette "X/4" (d.h. "1/4", "2/4", "3/4" oder "4/4") gekennzeichnet sein, welche angibt, dass insgesamt vier Darstellungen vorhanden sind, wobei jeweils das X angibt, die wievielte Darstellung aktuell angezeigt wird.

Darüber hinaus sind Darstellungen vorhanden, mit welchen dargestellt wird, dass sich das Fahrzeug 10 laut der dem Mobiltelefon 1 vorliegenden Daten in einem ordnungsgemäßen Zustand befindet, in welchem keine Warnmeldungen für den Fahrer vorhanden sind. Genauso kann mittels einer Darstellung nur angezeigt werden, dass der Treibstofftank des Fahrzeugs 10 über ein Minimalniveau hinaus (also ausreichend) gefüllt ist. Mittels eines Ausschnitts aus einem Stadtplan, wobei mit einem Kennzeichen die aktuelle Position des Fahrzeugs 10 markiert ist, kann der Betrachter einer entsprechenden Darstellung auf dem Mobilgerät über die örtliche Position des Fahrzeugs informiert werden.

Gemäß einer bevorzugten erfindungsgemäßen Ausführungsform werden die Daten, welche von dem Fahrzeug auf das Mobilgerät übertragen werden sollen, von dem Mobilgerät dem Fahrzeug vorgegeben (d.h. das Mobilgerät "abonniert" die zu übertragenden Daten (z.B. Ölstands, Türzustände)). Änderungen an diesen Daten, welche während einer bestehenden Verbindung zwischen dem Mobilgerät und dem Fahrzeug auftreten, werden sofort übertragen, so dass das Mobilgerät die aktuellen Daten, was entsprechende Änderungen während einer bestehenden Verbindung einschließt, sofort mitgeteilt werden. Die Kommunikationsverbindung zwischen dem Mobilgerät und dem Fahrzeug wird jeweils eine vorbestimmte Zeitspanne (beispielsweise 10 s) (im Hintergrund) aufrechterhalten, falls sich ein abonnierter Zustand oder Wert während der noch bestehenden Kommunikationsverbindung ändert.

Indem die Kommunikationsverbindung zwischen dem Mobilgerät und dem Fahrzeug jeweils um eine vorbestimmte Zeitspanne aufrechterhalten wird, wenn sich ein abonnierter Zustand oder abonnierter Wert während der noch bestehenden Kommunikationsverbindung ändert, kann zum einen die Anzahl der Verbindungsaufbauten zwischen dem Fahrzeug und dem Mobilgerät gesenkt werden und zum anderen eine zeitnahe Übertragung von sich ändernden Zuständen oder Werten gewährleistet werden.

Im Rahmen der vorliegenden Erfindung wird auch eine Vorrichtung zur Übertragung von Daten eines Fahrzeugs auf ein Mobilgerät bereitgestellt. Dabei umfasst die Vorrichtung eine Sende-/Empfangsvorrichtung, um die Daten des Fahrzeugs an das Mobilgerät zu senden und Daten von dem Mobilgerät zu empfangen. Darüber hinaus umfasst die Vorrichtung Erfassungsmittel, um einen Zeitpunkt zu erfassen, zu welchem das Mobilgerät das Fahrzeug verlässt. Die Vorrichtung ist derart ausgestaltet, dass die Vorrichtung das Mobilgerät informiert, sobald die Vorrichtung über die Erfassungsmittel den Zeitpunkt erfasst hat, zu welchem das Mobilgerät das Fahrzeug verlässt. Anschließend überträgt die Vorrichtung unter Steuerung des Mobilgeräts die Daten des Fahrzeugs an das Mobilgerät.

Im Rahmen der vorliegenden Erfindung wird auch ein Mobilgerät bereitgestellt, um Daten eines Fahrzeugs zu empfangen. Dabei umfasst das Mobilgerät eine Sende-/Empfangsvorrichtung, um Daten an das Fahrzeug zu senden und Daten von dem Fahrzeug zu empfangen, und eine Steuerung, um eine Übertragung der Daten von dem Fahrzeug zu dem Mobilgerät zu steuern. Das Mobilgerät ist dabei derart ausgestaltet, dass das Mobilgerät mit der Übertragung der Daten von dem Fahrzeug zu dem Mobilgerät beginnt, sobald das Mobilgerät eine vorbestimmte Information (insbesondere die Information, dass das Mobilgerät das Fahrzeug verlässt) von dem Fahrzeug erhält, und dass das Mobilgerät die Übertragung der Daten steuert.

Die Vorteile der erfindungsgemäßen Vorrichtung und des erfindungsgemäßen Mobilgeräts entsprechen im Wesentlichen den Vorteilen des erfindungsgemäßen Verfahrens, so dass hier auf die vorab beschriebenen Ausführungen bezüglich dieses erfindungsgemäßen Verfahrens verwiesen und auf eine Wiederholung verzichtet wird.

Bei einer erfindungsgemäßen Ausführungsform umfasst das Mobilgerät eine Anzeige, um einem menschlichen Benutzer Informationen darzustellen. Das Mobilgerät ist dabei derart ausgestaltet, dass das Mobilgerät die Daten des Fahrzeugs mittels der Anzeige darstellen kann.

Dadurch ist vorteilhafterweise gewährleistet, dass beispielsweise ein Fahrer des Fahrzeugs wichtige Fahrzeugzustandsdaten mittels des Mobilgeräts überprüfen kann, auch wenn er sich nicht in dem Fahrzeug oder in der Nähe des Fahrzeugs befindet.

Schließlich wird im Rahmen der vorliegenden Erfindung ein Fahrzeug bereitgestellt, welches die oben beschriebene erfindungsgemäße Vorrichtung umfasst.

Die vorliegende Erfindung ermöglicht eine situationsspezifische (abhängig vom Zustand des Fahrzeugs, der im Mobilgerät bereits gespeicherten Daten des Fahrzeugs und/oder abhängig von der Qualität der Kommunikationsverbindung zwischen Fahrzeug und Mobilgerät) und stille (der Benutzer/Fahrer bekommt davon nichts mit) Übertragung von Fahrzeugzustandsdaten auf das Mobilgerät, um diese Daten später dem Benutzer/Fahrer mittels des Mobilgeräts anzeigen zu können. Die vorliegende Erfindung ist insbesondere zur Überprüfung und Überwachung von Fahrzeugzustandsdaten geeignet. Selbstverständlich ist die vorliegende Erfindung jedoch nicht auf diesen bevorzugten Anwendungsbereich beschränkt. Beispielsweise ist es denkbar, die vorliegende Erfindung auch zur Überprüfung und Überwachung von Zustandsdaten eines Flugzeugs, eines Schiffes oder eines gleisgebundenen Fahrzeugs einzusetzen. Darüber hinaus ist es ebenfalls denkbar, jegliche Art von Daten, welche dem Fahrzeug bekannt sind, wie z.B. Ausstattungsvarianten des Fahrzeugs oder eine von dem Fahrzeug erfasste Umgebungstemperatur, an das Mobilgerät zu übertragen.

Im Folgenden wird die vorliegende Erfindung anhand bevorzugter Ausführungsformen mit Bezug zu den Figuren im Detail beschrieben.
Fig. 1 stellt ein erfindungsgemäßes Fahrzeug mit einer erfindungsgemäßen Vorrichtung in einer Kommunikationsverbindung mit einem erfindungsgemäßen Mobilgerät bzw. Mobiltelefon dar.
Fig. 2 stellt erfindungsgemäße Kommunikationsszenarien zwischen einem Fahrzeug und einem Mobilgerät dar.
Fig. 3 stellt einen erfindungsgemäßen Programmablaufplan für ein Mobilgerät bei einer Daten-Synchronisierung dar.
Fig. 4 stellt einen erfindungsgemäßen Programmablaufplan für ein Fahrzeug bei einer Daten-Synchronisierung dar.

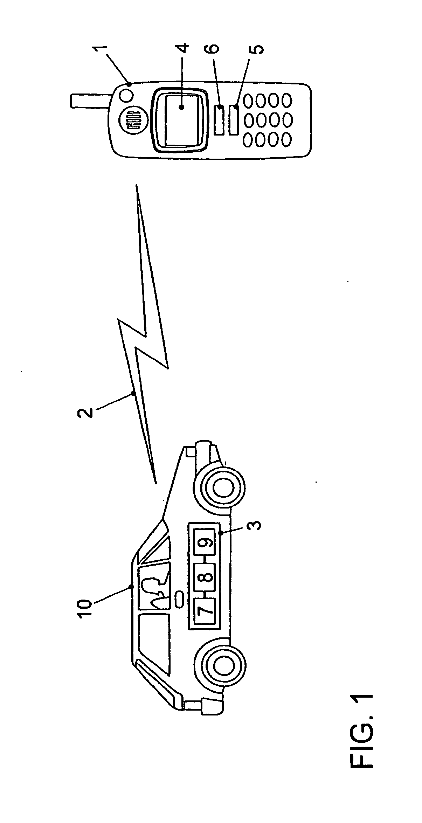

In Fig. 1 ist ein erfindungsgemäßes Fahrzeug 10 mit einer erfindungsgemäßen Vorrichtung 3 dargestellt. Die erfindungsgemäße Vorrichtung 3 umfasst ihrerseits eine Sende-/Empfangsvorrichtung 7, Erfassungsmittel 8 und eine Steuerung 9. Mit der Sende-/Empfangsvorrichtung 7 werden Daten mittels einer Bluetooth-Kommunikationsverbindung 2 zwischen der Vorrichtung 3 und einem erfindungsgemäßen Mobiltelefon 1 ausgetauscht. Die Erfassungsmittel 8 sind in der Lage, einen Zeitpunkt zu bestimmen, zu welchem das Mobiltelefon 1 das Fahrzeug 10 verlässt, um diesen Zeitpunkt dann mittels der Sende-/Empfangsvorrichtung 7 dem Mobiltelefon 1 mitzuteilen.

Das Mobiltelefon 1 umfasst Anzeigemittel 4, eine Sende-/Empfangsvorrichtung 5 und eine Steuerung 6. Mit der Sende-/Empfangsvorrichtung 7 werden Daten über die Bluetooth-Kommunikationsverbindung 2 zwischen dem Mobiltelefon 1 und der Vorrichtung 3 ausgetauscht. Mittels der Anzeigemittel 4 können von dem Fahrzeug 10 erfasste Daten einem Benutzer des Mobiltelefons 1 dargestellt werden.

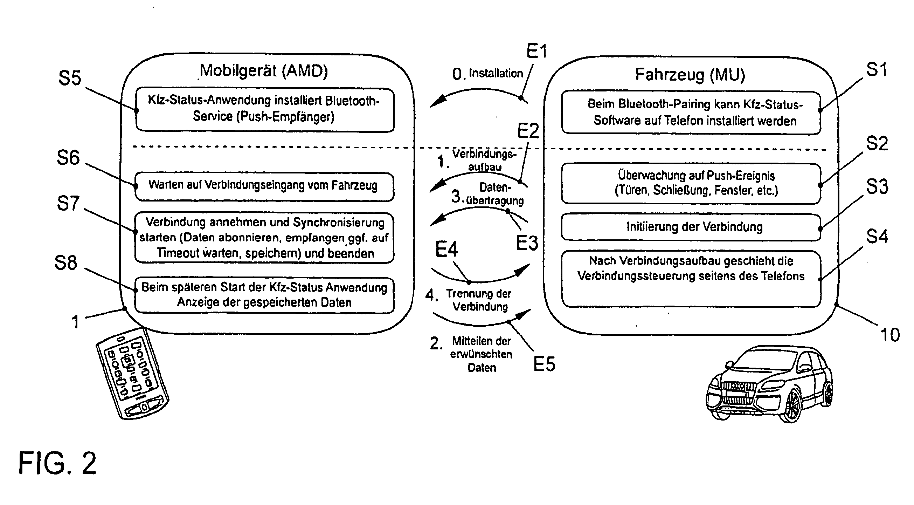

In Fig. 2 sind verschiedene Kommunikationsszenarien zwischen dem Mobiltelefon 1 und dem Fahrzeug 10 dargestellt. Dabei ist oberhalb der gestrichelten Linie ein Kommunikationsszenario zur Installation einer notwendigen Software zur Durchführung des erfindungsgemäßen Verfahrens seitens des Mobiltelefons 1 dargestellt. Unterhalb der gestrichelten Linie ist in Fig. 2 ein Kommunikationsszenario dargestellt, welches abläuft, um die Fahrzeugdaten auf das Mobiltelefon 1 zu übertragen.

Zur Installation der notwendigen Software auf dem Mobiltelefon 1 muss eine beidseitige Bestätigung (in der Regel mit einer PIN-Eingabe) erfolgen. Das heißt, die Installation der Software auf dem Mobiltelefon 1 ist nur möglich, wenn vorher eine Kopplung zwischen dem Mobiltelefon 1 und dem Fahrzeug 10 stattgefunden hat, wobei sowohl der Fahrer des Fahrzeugs 10 (oder eine andere für das Fahrzeug berechtigte Person) als auch der für das Mobiltelefon 1 Berechtigte (in der Regel wiederum der Fahrer) vorher explizit ihre Bestätigung erteilen. Damit ist gewährleistet, dass das erfindungsgemäße Verfahren nur durchgeführt wird, wenn das Mobiltelefon 1 einmal explizit mit dem entsprechenden Fahrzeug 10 gekoppelt wurde.

In einem Schritt S2 überprüft das Fahrzeug 10 oder genauer gesagt die Vorrichtung 3 des Fahrzeugs 10 durch eine Auswertung verschiedener Ereignisse, wie beispielsweise einem Abstellen des Motors, einem Schließen von Türen oder Fenstern, usw., ob das Mobiltelefon 1 das Fahrzeug 10 verlässt. Wenn das Fahrzeug 10 erkennt, dass das Mobiltelefon 1 das Fahrzeug 10 verlässt, wenn also ein entsprechendes Push-Ereignis vorliegt, initiiert das Fahrzeug 10 in dem Schritt S3 einen Verbindungsaufbau, wobei das Fahrzeug 10 das Mobiltelefon 1 kontaktiert, was in Fig. 2 mit dem Bezugszeichen E2 gekennzeichnet ist. Das Mobiltelefon 1 befindet sich zu dem Zeitpunkt, zu welchem das Fahrzeug 10 mit dem Mobiltelefon 1 in Kontakt tritt, in dem Verfahrensschritt S6 und wartet auf einen Verbindungseingang von dem Fahrzeug 10.

Aufgrund der Kontaktaufnahme E2 nimmt das Mobiltelefon 1 in dem Schritt S7 automatisch (ohne Aktion des Benutzers) die Verbindung an und startet die Synchronisierung. Die weitere Vorgehensweise bei der Übertragung der Daten wird nun von dem Mobiltelefon 1 gesteuert. Dazu sendet das Mobiltelefon 1 ein Datenpaket an das Fahrzeug 10, um dem Fahrzeug 10 damit mitzuteilen, welche Daten das Mobiltelefon 1 empfangen möchte, was in Fig. 2 mit dem mit E5 gekennzeichneten Pfeil dargestellt ist. Das Fahrzeug 10 antwortet, indem es die gewünschten Daten zurückschickt, was in Fig. 2 mit dem mit E3 gekennzeichneten Pfeil dargestellt ist.

Wenn das Mobiltelefon auf diese Weise alle Daten von dem Fahrzeug 10 erfasst hat, trennt das Mobiltelefon 1 die Verbindung, indem es eine entsprechende Anweisung an das Fahrzeug 10 sendet, was in Fig. 2 mit dem mit E4 gekennzeichneten Pfeil dargestellt ist.

Wenn der Benutzer des Mobiltelefons 1 die Daten von dem Fahrzeug 10 auf dem Mobiltelefon 1 darstellen möchte, startet er die entsprechende Anwendung auf dem Mobiltelefon 1, wodurch das Mobiltelefon 1 zu dem Schritt S8 gelangt. In diesem Schritt S8 stellt das Mobiltelefon 1 einen gewünschten Ausschnitt der von dem Fahrzeug 10 übermittelten Daten dar.

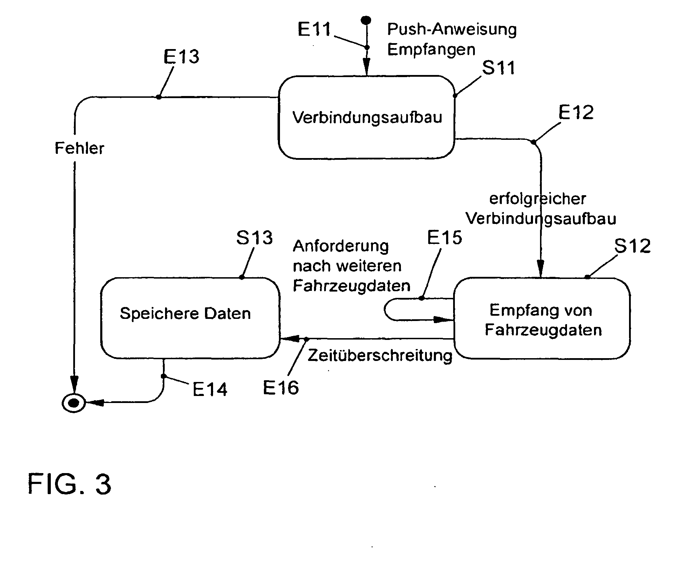

In Fig. 3 ist ein Flussablaufplan eines auf dem Mobiltelefon 1 ablaufenden Verfahrens zur Übertragung oder Synchronisierung der Fahrzeugdaten dargestellt.

Wenn eine Push-Anweisung empfangen wird E11, akzeptiert das Mobiltelefon in Schritt S11 die eingehende Push-Verbindung, baut die Verbindung zu dem Fahrzeug 10 vollständig auf und teilt dem Fahrzeug 10 mit, welche Daten das Fahrzeug 10 an das Mobiltelefon 1 zu senden hat. Bei einem erfolgreichen Verbindungsaufbau E12 verzweigt das Verfahren zu Schritt S12 und bei einem Fehler E13 endet das Verfahren.

In dem Schritt S12 empfängt das Mobiltelefon 1 Fahrzeugdaten und speichert diese Daten in dem Mobiltelefon 1 ab. Dabei werden über E15 weitere Fahrzeugdaten von dem Fahrzeug 10 angefordert. Dabei steuert das Mobiltelefon 1 fahrzeugabhängig und auch datenabhängig (d.h. abhängig von dem jeweiligen Betriebszustand des Fahrzeugs 10), welche Daten es von dem Fahrzeug 10 anfordert.

Nachdem alle angeforderten Fahrzeugdaten empfangen worden sind oder nachdem eine Zeitüberschreitung aufgetreten ist, verzweigt das Verfahren über E16 zu dem Schritt S13. Beispielsweise ist es möglich, dass die Bluetooth-Verbindung 2 noch eine vorbestimmte Zeitspanne von dem Mobiltelefon 1 gehalten wird, auch wenn bereits alle Daten übertragen worden sind, um weitere Zustandsänderungen (z.B. eine noch nicht erfolgte Verriegelung des Fahrzeugs 10) zu erfassen, so dass die Verzweigung E16 erst nach Ablauf der vorbestimmten Zeitspanne erfolgt.

In dem Schritt S13 werden die noch nicht gespeicherten Fahrzeugdaten in dem Mobiltelefon 1 gespeichert, die Bluetooth-Verbindung zu dem Fahrzeug 10 abgebaut und das Verfahren über E14 verlassen.

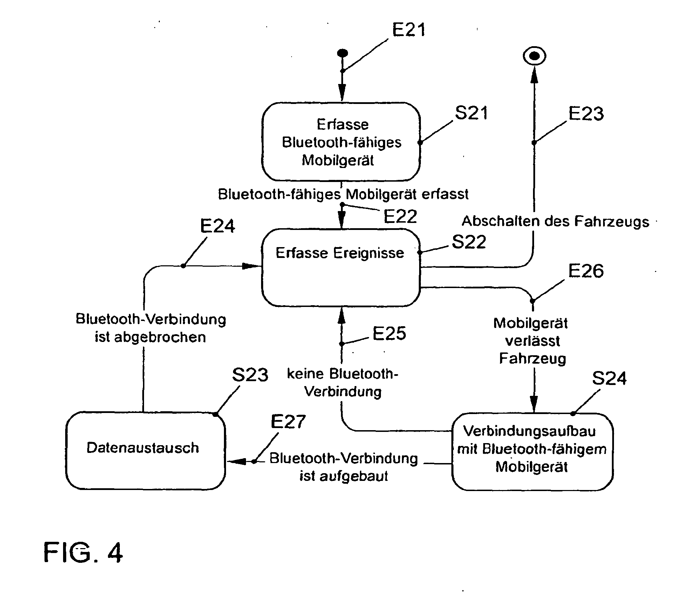

In Fig. 4 ist ein Flussablaufplan eines entsprechenden in der Vorrichtung 3 bzw. in dem Fahrzeug 10 ablaufenden Verfahrens zur Übertragung oder Synchronisierung der Fahrzeugdaten dargestellt.

Nach einer Aktivierung des Fahrzeugs 10 (dargestellt durch E21) versucht das Fahrzeug 10 im Schritt S21 Bluetooth-fähige Mobiltelefone 1 zu erfassen. Wenn das Fahrzeug 10 ein Bluetooth-fähiges Mobiltelefon 1 erfasst hat, verzweigt es über E22 zu dem Schritt S22.

Wenn das Fahrzeug 10 deaktiviert wird, endet das Verfahren was durch E23 dargestellt ist. Wenn das Fahrzeug 10 in dem Schritt S22 erfasst, dass das Mobiltelefon 1 das Fahrzeug 10 verlässt, verzweigt das Verfahren über E26 zu dem Schritt S24.

In dem Schritt S24 baut das Fahrzeug 10 eine Bluetooth-Verbindung, insbesondere eine Push-Verbindung, zu dem Mobiltelefon 1 auf. Erfolgt in einer vorbestimmten Zeitspanne keine Rückmeldung von dem Mobiltelefon 1, verzweigt das Verfahren über E25 wieder zurück zu Schritt S22. Ist der Bluetooth-Verbindungsaufbau erfolgreich, verzweigt das Verfahren über E27 zu Schritt S23.

Im Schritt S23 findet der Datenaustausch mit dem Mobiltelefon 1 unter der Steuerung des Mobiltelefons 1 statt, wobei das Fahrzeug 10 die von dem Mobiltelefon 1 angeforderten Daten an das Mobiltelefon 1 überträgt. Wenn das Mobiltelefon 1 die Verbindung abbricht, verzweigt das Verfahren über E24 wieder zurück zu dem Schritt S22. Wenn das Fahrzeug 10 deaktiviert wird, verzweigt das Verfahren über E24 und E23 und wird beendet.

### BEZUGSZEICHENLISTE

- 1: Mobiltelefon
- 2: Bluetooth-Kommunikationsverbindung
- 3: Vorrichtung
- 4: Anzeigemittel
- 5: Sende-/Empfangsvorrichtung
- 6: Steuerung
- 7: Sende-/Empfangsvorrichtung
- 8: Erfassungsmittel
- 9: Steuerung
- 10: Fahrzeug
- E1-E27: Ereignis
- S1-S24: Schritt

## Patentansprüche

1. Verfahren zur Übertragung von Daten eines Fahrzeugs (10) auf ein Mobilgerät (1),
**dadurch gekennzeichnet,**
**dass** ein Zeitpunkt erfasst wird, zu welchem das Mobilgerät (1) das Fahrzeug (10) verlässt,
**dass** das Mobilgerät (1) von einer Vorrichtung (3) des Fahrzeugs (10) informiert wird, sobald das Mobilgerät (1) das Fahrzeug (10) verlässt,
**dass** die Übertragung der Daten von der Vorrichtung (3) auf das Mobilgerät (1) ab dem erfassten Zeitpunkt von dem Mobilgerät (1) gestartet und gesteuert wird, und
**dass** die Übertragung der Daten automatisch ohne eine Benutzeraktion erfolgt.

2. Verfahren nach Anspruch 1, **dadurch gekennzeichnet, dass** Daten, welche in einem bestimmten Betriebszustand des Fahrzeugs (10) nicht mehr erfassbar sind, gespeichert werden, bevor das Fahrzeug (10) in diesen Betriebszustand kommt.

3. Verfahren nach Anspruch 1 oder 2, **dadurch gekennzeichnet, dass** Daten über einen kritischen Zustand des Fahrzeugs (10), welcher eine Weiterfahrt des Fahrzeugs (10) negativ beeinflusst, zu einem Zeitpunkt auf das Mobilgerät (1) übertragen werden, zu welchem der kritische Zustand erfasst wird.

4. Verfahren nach einem der vorhergehenden Ansprüche, **dadurch gekennzeichnet, dass** das Mobilgerät (1) in einem ersten Schritt abfragt, welche Informationen von dem Fahrzeug (10) übertragbar sind, und dass in einem dem ersten Schritt folgenden zweiten Schritt abhängig von den Informationen die Daten des Fahrzeugs (10) auf das Mobilgerät (1) übertragen werden.

5. Verfahren nach einem der vorhergehenden Ansprüche, **dadurch gekennzeichnet, dass** die Übertragung der Daten direkt zwischen dem Fahrzeug (10) und dem Mobilgerät (1) mittels eines Nahbereichsfunks (2) durchgeführt wird.

6. Verfahren nach einem der vorhergehenden Ansprüche, **dadurch gekennzeichnet, dass** zumindest einer von folgenden Betriebszuständen erfasst und zur Erfassung des Zeitpunktes, zu welchem das Mobilgerät (1) das Fahrzeug (10) verlässt, eingesetzt wird:
• ein Abstellen eines Motors des Fahrzeugs (10),
• ein Abziehen eines Zündschlüssels des Fahrzeugs (10),
• ein Verriegeln des Fahrzeugs (10),
• ein Öffnen und Schließen einer Tür des Fahrzeugs (10) nach dem Abstellen des Motors,
• ein Schließen eines Fensters des Fahrzeugs (10) nach dem Abstellen des Motors,
• ein Ausstellen einer Beleuchtung des Fahrzeugs (10) nach dem Abstellen des Motors,
• ein Einlegen eines P-Gangs in ein Automatikgetriebe des Fahrzeugs (10),
• ein Anziehen einer Handbremse des Fahrzeugs (10) nach dem Abstellen des Motors,
• ein Verlassen eines Fahrersitzes des Fahrzeugs (10),
• ein Aktivieren einer Alarmanlage des Fahrzeugs (10),
• ein Verlassen eines Innenraums des Fahrzeugs (10),
• ein Deaktivieren eines CAN-Busses des Fahrzeugs (10), und
• das Mobilgerät (1) wird aus einer Mobilgeräthalterung des Fahrzeugs (10) entfernt.

7. Verfahren nach einem der vorhergehenden Ansprüche, **dadurch gekennzeichnet, dass** die Daten des Fahrzeugs (10) zumindest eine von folgenden Informationen umfassen:
• einen Öffnungsgrad eines Fensters, einer Tür, eines Schiebedaches oder einer Klappe des Fahrzeugs (10),
• einen Verriegelungszustand einer Tür des Fahrzeugs (10),
• einen Füllstand eines Tanks des Fahrzeugs (10),
• einen Ölfüllstand des Fahrzeugs (10),
• einen Druck eines Reifens des Fahrzeugs (10),
• eine aktuelle geographische Position des Fahrzeugs (10),
• ein Betriebszustand einer Beleuchtungsvorrichtung des Fahrzeugs (10), und
• eine Information über einen bevorstehenden Service an dem Fahrzeug (10).

8. Verfahren nach einem der vorhergehenden Ansprüche,
**dadurch gekennzeichnet,**
**dass** von dem Mobilgerät dem Fahrzeug (10) die Daten vorgegeben werden, welche von dem Fahrzeug (10) auf das Mobilgerät (1) übertragen werden,
**dass** Änderungen dieser Daten, welche während einer bestehenden Verbindung zwischen dem Mobilgerät (1) und dem Fahrzeug (10) auftreten, sofort bei einem Auftreten der entsprechenden Änderung übertragen werden, und
**dass** die Verbindung zwischen dem Mobilgerät (1) und dem Fahrzeug (10) nach
dem Auftreten der entsprechenden Änderung noch eine vorbestimmte Zeitspanne aufrechterhalten wird.

9. Vorrichtung zur Übertragung von Daten eines Fahrzeugs (10) auf ein Mobilgerät (1),
wobei die Vorrichtung (3) Mittel (7) zur Übertragung der Daten an das Mobilgerät (1) und zum Empfang von Daten von dem Mobilgerät (1) umfasst,
**dadurch gekennzeichnet,**
**dass** die Vorrichtung (3) Erfassungsmittel (8) zur Erfassung eines Zeitpunktes umfasst, zu welchem das Mobilgerät (1) das Fahrzeug (10) verlässt,
**dass** die Vorrichtung (3) derart ausgestaltet ist, dass die Vorrichtung (3) das Mobilgerät (1) informiert, sobald die Erfassungsmittel (8) den Zeitpunkt erfassen, dass die Vorrichtung (3) zur Übertragung der Daten an das Mobilgerät (1) unter Steuerung des Mobilgeräts (1) ausgestaltet ist, und
**dass** die Vorrichtung (3) derart ausgestaltet ist, dass die Vorrichtung (3) die Daten automatisch ohne eine Benutzeraktion überträgt.

10. Vorrichtung nach Anspruch 9, **dadurch gekennzeichnet, dass** die Vorrichtung (3) zur Durchführung des Verfahrens nach einem der Ansprüche 1-8 ausgestaltet ist.

11. Mobilgerät zum Empfang von Daten eines Fahrzeugs,
wobei das Mobilgerät (1) Mittel (5) zur Übertragung von Daten an das Fahrzeug (10) und zum Empfang von Daten von dem Fahrzeug (10) und Steuermittel (6) zur Steuerung einer Übertragung der Daten von dem Fahrzeug (10) zu dem Mobilgerät (1) umfasst,
**dadurch gekennzeichnet,**
**dass** das Mobilgerät (1) derart ausgestaltet ist, dass das Mobilgerät (1) die Übertragung der Daten von dem Fahrzeug (10) zu dem Mobilgerät (1) steuert und mit der Übertragung der Daten startet, sobald das Mobilgerät (1) eine vorbestimmte Information von dem Fahrzeug (10) empfängt, und
**dass** die Übertragung der Daten automatisch ohne eine Benutzeraktion erfolgt.

12. Mobilgerät nach Anspruch 11, **dadurch gekennzeichnet, dass** das Mobilgerät (1) Anzeigemittel (4) zur Darstellung von Informationen umfasst, und dass das Mobilgerät (1) derart ausgestaltet ist, dass das Mobilgerät (1) die Informationen auf dem Anzeigemittel (4) in Abhängigkeit von den Daten des Fahrzeugs (10) darstellt.

13. Mobilgerät nach Anspruch 11 oder 12, **dadurch gekennzeichnet, dass** das Mobilgerät (1) zur Durchführung des Verfahrens nach einem der Ansprüche 1-8 ausgestaltet ist.

14. Fahrzeug mit einer Vorrichtung (3) nach Anspruch 9 oder 10.

## Claims

1. Method for transmitting data of a vehicle (10) to a mobile device (1),
**characterized**
**in that** a point in time is sensed at which the mobile device (1) leaves the vehicle (10),
**in that** the mobile device (1) is informed by an apparatus (3) of the vehicle (10) as soon as the mobile device (1) leaves the vehicle (10),
**in that** the transmission of the data from the device (3) to the mobile device (1) is started and controlled starting from the sensed point in time by the mobile device (1),
and
**in that** the transmission of the data takes place automatically without a user action.

2. Method according to Claim 1, **characterized in that** data which can no longer be sensed in a specific operating state of the vehicle (10) is stored before the vehicle (10) enters this operating state.

3. Method according to Claim 1 or 2, **characterized in that** data relating to a critical state of the vehicle (10), which state has an adverse effect on continued travel of the vehicle (10), is transmitted to the mobile device (1) at a point in time at which the critical state is sensed.

4. Method according to one of the preceding claims, **characterized in that** in a first step the mobile device (1) interrogates which information can be transmitted by the vehicle (10), and **in that** in a second step following the first step the data of the vehicle (10) is transmitted to the mobile device (1) as a function of the information.

5. Method according to one of the preceding claims, **characterized in that** the transmission of the data is carried out directly between the vehicle (10) and the mobile device (1) by means of a close-range radio system (2).

6. Method according to one of the preceding claims, **characterized in that** at least one of the following operating states is sensed and is used to sense the point in time at which the mobile device (1) leaves the vehicle (10):
• shutting down of an engine of the vehicle (10),
• pulling out an ignition key of the vehicle (10),
• locking of the vehicle (10),
• opening and closing of a door of the vehicle (10) after the shutting down of the engine,
• closing of a window of the vehicle (10) after the shutting down of the engine,
• switching off a lighting system of the vehicle (10) after the shutting down of the engine,
• engagement of a P gear in an automatic transmission of the vehicle (10),
• application of a handbrake of the vehicle (10) after the shutting down of the engine,
• vacating of a driver's seat of the vehicle (10),
• activating of an alarm system of the vehicle (10),
• vacating of a passenger compartment of the vehicle (10),
• deactivation of a CAN bus of the vehicle (10), and
• the mobile device (1) is removed from a mobile device mount in the vehicle (10).

7. Method according to one of the preceding claims, **characterized in that** the data of the vehicle (10) comprise at least one of the following information items:
• a degree of opening of a window, of a door, of a sunroof, or of a flap of the vehicle (10),
• a state of locking of a door of the vehicle (10),
• a filling level of a tank of the vehicle (10),
• an oil filling level of the vehicle (10),
• a pressure of a tyre of the vehicle (10),
• a current geographical position of the vehicle (10),
• an operating state of a lighting device of the vehicle (10), and
• an information item relating to an imminent service on the vehicle (10).

8. Method according to one of the preceding claims, **characterized in that** the data which is transmitted from the vehicle (10) to the mobile device (1) is predefined to the vehicle (10) by the mobile device, **in that** changes in this data, which occur during an existing connection between the mobile device (1) and the vehicle (10), are transmitted immediately when the corresponding change occurs, and
**in that** the connection between the mobile device (1) and the vehicle (10) is maintained for a predetermined period after the occurrence of the corresponding change.

9. Device for transmitting data of a vehicle (10) to a mobile device (1),
wherein the device (3) comprises means (7) for transmitting the data to the mobile device (1) and for receiving the data from the mobile device (1),
**characterized**
**in that** the device (3) comprises sensing means (8) for sensing a point in time at which the mobile device (1) leaves the vehicle (10),
**in that** the device (3) is configured in such a way that the device (3) informs the mobile device (1) as soon as the sensing means (8) sense the point in time,
**in that** the device (3) is configured to transmit the data to the mobile device (1) while controlling the mobile device (1), and
**in that** the device (3) is configured in such a way that the device (3) transmits the data automatically without a user action.

10. Device according to Claim 9, **characterized in that** the device (3) is configured to carry out the method according to one of Claims 1-8.

11. Mobile device for receiving data of a vehicle,
wherein the mobile device (1) comprises means (5) for transmitting data to the vehicle (10) and for receiving data from the vehicle (10), and control means (6) for controlling transmission of the data from the vehicle (10) to the mobile device (1),
**characterized**
**in that** the mobile device (1) is configured in such a way that the mobile device (1) controls the transmission of the data from the vehicle (10) to the mobile device (1) and starts the transmission of the data as soon as the mobile device (1) receives a predetermined information item from the vehicle (10), and
**in that** the transmission of the data takes place automatically without a user action.

12. Mobile device according to Claim 11, **characterized in that** the mobile device (1) comprises a display means (4) for displaying information, and **in that** the mobile device (1) is configured in such a way that the mobile device (1) displays the information on the display means (4) as a function of the data of the vehicle (10).

13. Mobile device according to Claim 11 or 12, **characterized in that** the mobile device (1) is configured to carry out the method according to one of Claims 1-8.

14. Vehicle having a device (3) according to Claim 9 or 10.

## Revendications

1. Procédé pour la transmission de données d'un véhicule (10) à un appareil mobile (1) ;
**caractérisé en ce que** :
un instant est détecté auquel l'appareil mobile (1) quitte le véhicule (10) ;
l'appareil mobile (1) est informé par un dispositif (3) du véhicule (10) dès que l'appareil mobile (1) quitte le véhicule (10) ;
la transmission des données du dispositif (3) à l'appareil mobile (1) démarre et est commandée à l'instant détecté par l'appareil mobile (1) ; et
la transmission des données se produit automatiquement sans action de l'utilisateur.

2. Procédé selon la revendication 1, **caractérisé en ce que** les données ne pouvant être détectées dans un état de fonctionnement défini du véhicule (10) sont mémorisées avant que le véhicule (10) entre dans cet état de fonctionnement.

3. Procédé selon la revendication 1 ou 2, **caractérisé en ce que** les données relatives à un état critique du véhicule (10) influençant négativement une continuation de course du véhicule (10) à un instant auquel l'état critique est détecté sont transmises à l'appareil mobile (1).

4. Procédé selon l'une quelconque des revendications précédentes, **caractérisé en ce que** l'appareil mobile (1) interroge au cours d'une première étape quelles informations peuvent être transmises par un véhicule (10) et que les données du véhicule (10) sont transmises à l'appareil mobile (1) en fonction des informations lors d'une deuxième étape suivant la première étape.

5. Procédé selon l'une quelconque des revendications précédentes, **caractérisé en ce que** la transmission des données est effectuée directement entre le véhicule (10) et l'appareil mobile (1) à l'aide d'un réseau local (2).

6. Procédé selon l'une quelconque des revendications précédentes, **caractérisé en ce qu'**au moins un des états de fonctionnement suivants est détecté et que pour détecter l'instant auquel l'appareil mobile (1) quitte le véhicule (10), on utilise :
- un arrêt d'un moteur du véhicule (10) ;
- un retrait d'une clé d'allumage du véhicule (10) ;
- un verrouillage du véhicule (10) ;
- une ouverture et fermeture d'une porte du véhicule (10) une fois le moteur arrêté ;
- une fermeture d'une fenêtre du véhicule (10) une fois le moteur arrêté ;
- une déconnexion d'un éclairage du véhicule (10) une fois le moteur arrêté ;
- la mise en place d'un rapport P dans une boîte de vitesses automatique du véhicule (10) ;
- une mise sous tension du frein à main du véhicule (10) une fois le moteur arrêté ;
- la sortie du siège de conducteur du véhicule (10) ;
- une activation d'une installation d'alarme du véhicule (10) ;
- la sortie d'un habitacle du véhicule (10) ;
- une désactivation d'un bus CAN du véhicule (10) ; et
- le retrait de l'appareil mobile (1) hors d'un support d'appareil mobile du véhicule (10).

7. Procédé selon l'une quelconque des revendications précédentes, **caractérisé en ce que** les données du véhicule (10) comprennent au moins une des informations suivantes :
- un degré d'ouverture d'une fenêtre, d'une porte, d'un toit ouvrant ou d'un abattant du véhicule (10) ;
- un état de verrouillage d'une porte du véhicule (10) ;
- un état de remplissage d'un réservoir du véhicule (10) ;
- un état de niveau d'huile du véhicule (10) ;
- une pression d'un pneumatique du véhicule (10) ;
- une position géographique actuelle du véhicule (10) ;
- un état de fonctionnement d'un dispositif d'éclairage du véhicule (10) ; et
- une information sur un entretien imminent du véhicule (10).

8. Procédé selon l'une quelconque des revendications précédentes ;
**caractérisé en ce que** :
les données transmises à l'appareil mobile (1) par le véhicule (10) sont envoyées au préalable au véhicule (10) par l'appareil mobile ;
des modifications de ces données survenant pendant une liaison existante entre l'appareil mobile (1) et le véhicule (10) sont immédiatement transmises en cas de survenue de la modification correspondante ; et
la liaison entre l'appareil mobile (1) et le véhicule (10) est encore conservée pendant un certain intervalle de temps après la survenue de la modification correspondante.

9. Dispositif pour la transmission de données d'un véhicule (10) à un appareil mobile (1) ;
le dispositif (3) comprenant des moyens (7) de transmission des données à l'appareil mobile (1) et de réception des données depuis l'appareil mobile (1) ; **caractérisé en ce que** :
le dispositif (3) comporte des moyens de détection (8) pour détecter un instant auquel l'appareil mobile (1) quitte le véhicule (10) ;
le dispositif (3) est configuré de telle sorte que le dispositif (3) informe l'appareil mobile (1) dès que les moyens de détection (8) détectent l'instant ;
le dispositif (3) est configuré pour la transmission des données à l'appareil mobile (1) en commandant l'appareil mobile (1) ; et
le dispositif (3) est configuré de telle sorte que le dispositif (3) transmette automatiquement les données sans action de l'utilisateur.

10. Dispositif selon la revendication 9, **caractérisé en ce que** le dispositif (3) est configuré pour la mise en oeuvre du procédé selon l'une quelconque des revendications 1 à 8.

11. Appareil mobile servant à la réception de données d'un véhicule ;
l'appareil mobile (1) comprenant des moyens (5) de transmission de données au véhicule (10) et de réception de données provenant du véhicule (10) et des moyens de commande (6) pour commander une transmission des données du véhicule (10) à l'appareil mobile (1), **caractérisé en ce que** l'appareil mobile (1) est configuré de telle sorte que l'appareil mobile (1) commande la transmission des données du véhicule (10) à l'appareil mobile (1) et démarre avec la transmission des données dès que l'appareil mobile (1) reçoit du véhicule (10) une information prédéterminée et que la transmission des données se produit automatiquement sans action de l'utilisateur.

12. Appareil mobile selon la revendication 11, **caractérisé en ce que** l'appareil mobile (1) comprend des moyens d'affichage (4) servant à représenter des informations et que l'appareil mobile (1) est configuré de telle sorte que l'appareil mobile (1) représente les informations sur le moyen d'affichage (4) en fonction des données du véhicule (10).

13. Appareil mobile selon la revendication 11 ou 12, **caractérisé en ce que** l'appareil mobile (1) est configuré pour la mise en oeuvre du procédé selon l'une quelconque des revendications 1 à 8.

14. Véhicule avec un dispositif (3) selon la revendication 9 ou 10.
